# EUROPEAN PATENT SPECIFICATION

(11) **EP 2 457 261 B1**
(45) Date of publication and mention of the grant of the patent: **02.04.2014**
(21) Application number: 10739495.9
(22) Date of filing: 28.06.2010
(51) Int. Cl.: E04H 6/42

(54) **VEHICLE PARKING STOPPER**
FAHRZEUGPARKSTOPPER
BUTÉE DE STATIONNEMENT DE VÉHICULE

(30) Priority: 22.07.2009 IT MI20090224 U
(43) Date of publication of application: 30.05.2012
(73) Proprietor: Colli, Luciano, 21040 Gerenzano (VA) (IT); Morandi, Alberto, 21040 Cislago (VA) (IT)
(72) Inventor: Colli, Luciano, 21040 Gerenzano (VA) (IT); Morandi, Alberto, 21040 Cislago (VA) (IT)
(74) Representative: Riccardi, Sergio
(86) International application number: PCT/EP2010/003801
(87) International publication number: WO 2011/009516

(56) References cited:
- WO-A1-2009/018621

## Description

The present invention relates to a vehicle parking stopper, particularly a mechanical stopper able to be applied even on only one wheel of said vehicles to be parked.

In parking areas, they may even be public or private, it is often possible to notice systems helping a driver in parking his vehicle, namely systems able to warn when a minimal distance from limits set for the parking space said driver is accessing is reached. Such systems have several mechanical or electronic devices, and several operating modes since, besides the more simple ones in which driver perceives a contact between the wheel and the device, there are more complex ones which are able to warn the driver by lighting or acoustic signals near the abovementioned limits of the parking space. Without going into details of the various solutions available on the market it is sufficient to consider that among these solutions the most cheap ones are not much flexible in case of rearrangement of the parking spaces within the parking area - in such case it suffices to think about simple concrete blocks at the borders of each parking space against which blocks the vehicle wheels abut - and, vice versa, the ones able to be rearranged in a more easy manner are much more expensive since provided with mechanical and electronic devices sensing an approaching vehicle - above all the most expensive solutions often need to be fixed.

The vehicle parking stopper according to the present invention results instead a minimal cost solution and at the same time provides a prompt installation inside any parking area. Document WO 2009/018621 discloses a parking aid of this kind.

Object of the present invention is therefore to provide a vehicle stopper which does not require any fastening means on the ground and/or fixed parts of the parking area.

Further object of the present invention is then to provide a vehicle stopper able to be used to define parking distance between a vehicle and the previous one and the subsequent one in case they are displaced along a line.

A detailed description of the vehicle parking stopper according to the present invention will be now provided with reference to the annexed drawings, in which:
Fig. 1 is a perspective view of the vehicle parking stopper according to the present invention in its single arrangement, with fixing and adjusting plates connected at their shorter sides,
Fig. 2 is a top view of the stopper in fig. 1,
Fig. 3 is a lateral view of the stopper in fig. 1,
Fig. 4 is a perspective view of the vehicle parking stopper according to the present invention in its double arrangement,
Fig. 5 is a top view of the stopper in fig. 4,
Fig. 6 is a lateral view of the stopper in fig. 4,
Fig. 7 is a perspective view of the vehicle parking stopper according to the present invention in its single arrangement, with fixing and adjusting plates connected at their longer sides,
Fig. 8 is a top view of the stopper in fig. 7,
Fig. 9 is a lateral view of the stopper in fig. 7,
Fig. 10 is a lateral view of the stopper applied to a plurality of vehicles parked in line, the first vehicle being provided with the single arrangement of Fig. 1 and the second vehicle with the double arrangement of Fig. 4, and
Fig. 11 is a lateral view of the stopper in fig. 7, applied to a single vehicle.

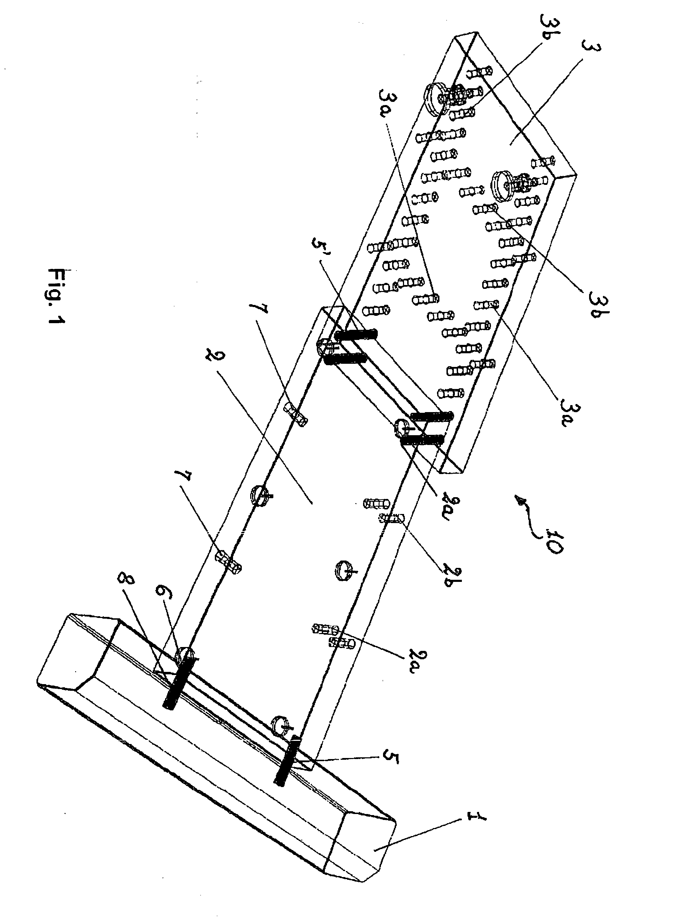

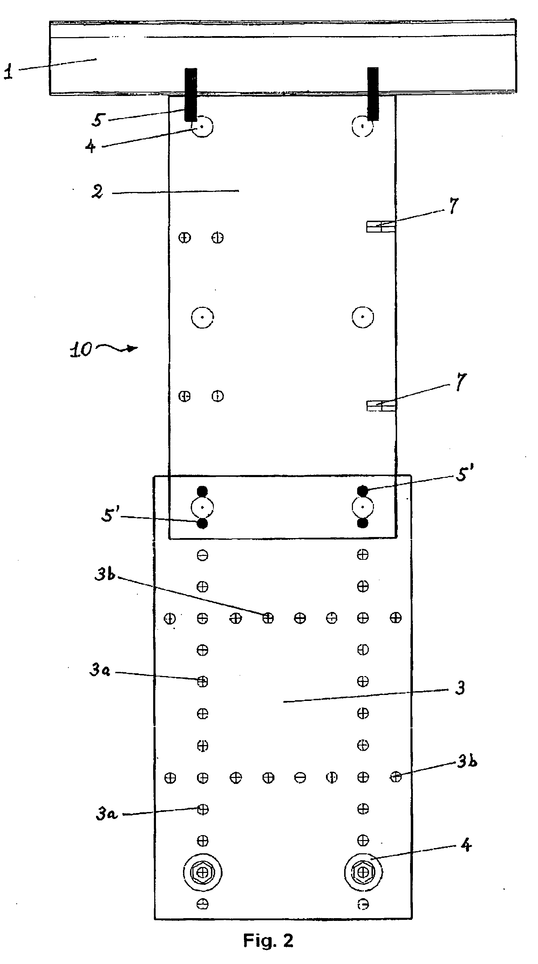

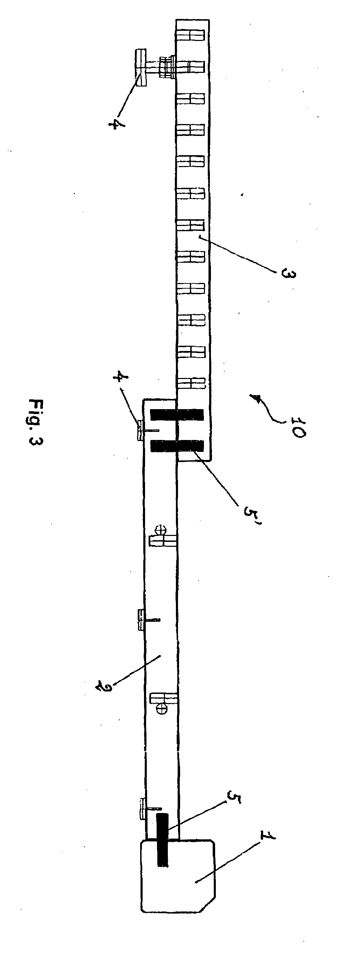

With reference now to figs. 1 to 3, a vehicle parking stopper 10 according to the present invention comprises an abutting member 1 for a wheel of said vehicle, a fixing plate 2 for said abutting member 1 and a adjusting plate 3 operatively connected with said fixing plate 2, said plates 2 and 3 having a rectangular shape and being connected along their corresponding shorter sides. The abutting member 1 is dimensioned for a single wheel and has a cross section almost rectangular and with a chamfer at the side provided for vehicle wheel abutment, so as to avoid damaging in case of impact at a not suitably controlled speed. On a side opposed to the abutting one said member 1 has instead, on one of the lateral faces, a pair of hole 8 adapted to engage a pair of pins 5. Said pins 5 serve to make member 1 integral with fixing plate 2, provided with a pair of holes 6 having the same axle base of the pair of holes 8 and being adapted, as well, to engage said pair of pins 5 for fixing said member 1 to said plate 2. The latter is further provided with two pairs of holes 2a at the upper face next to short lateral face opposed to the one on which the holes 6 are formed. Now the adjusting plate 3 is fixed onto the fixing plate 2 by engagement of said pins 5' in any double pair of holes 3a of the plurality formed on the whole lower face of said plate 3 along a direction parallel to its longer side. Therefore by coupling the abovementioned plates 2 and 3 at each pair of holes 3a a greater or smaller protrusion of said plate 3 in respect of said plate 2 is achieved and, therefore a different distance of said member 1 from a fixed structure - such as a garage wall for example - the adjusting plate 3 abuts against. Moreover, in order to avoid a damaging bending of the plate 3 due to the vehicle push and said protrusion, it is provided with feet 4 next to the side abutting against the fixed structure.

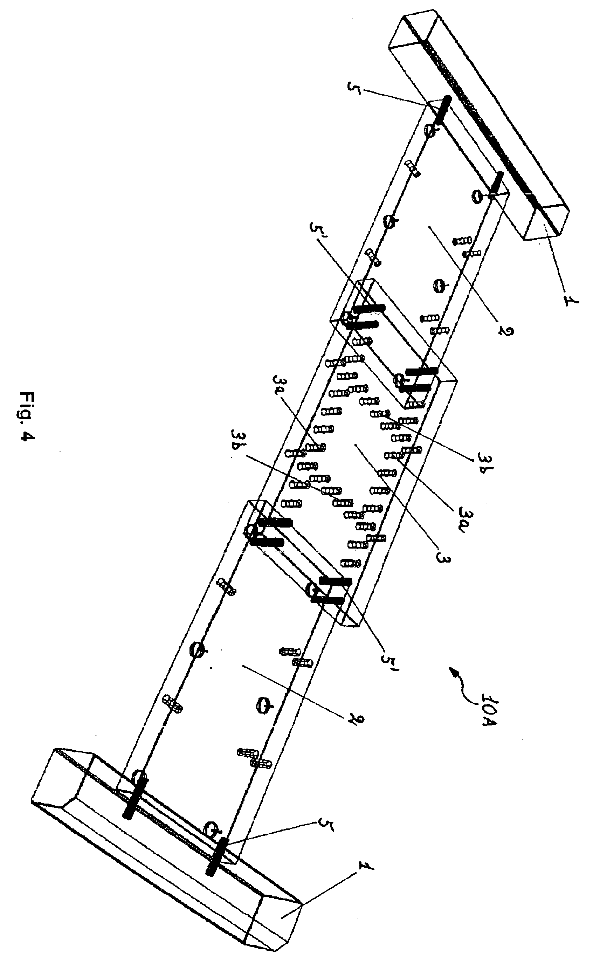

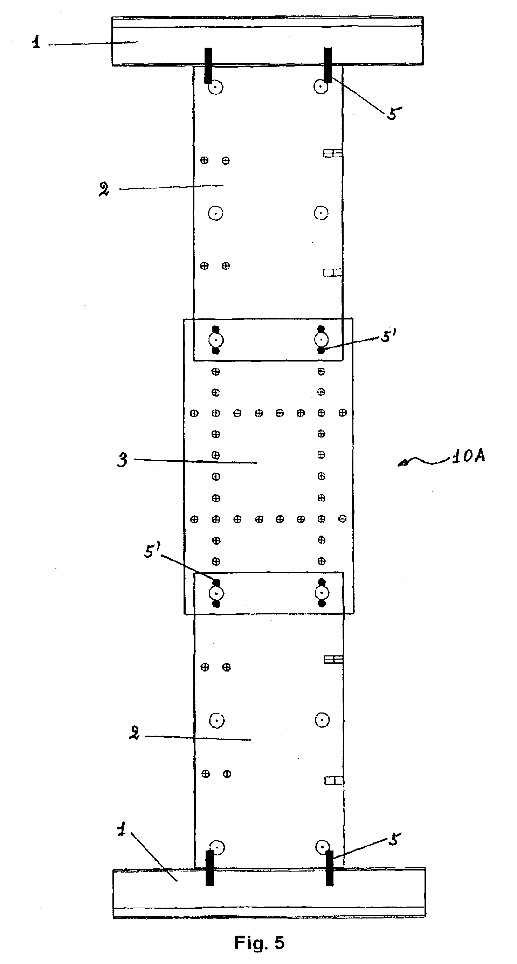

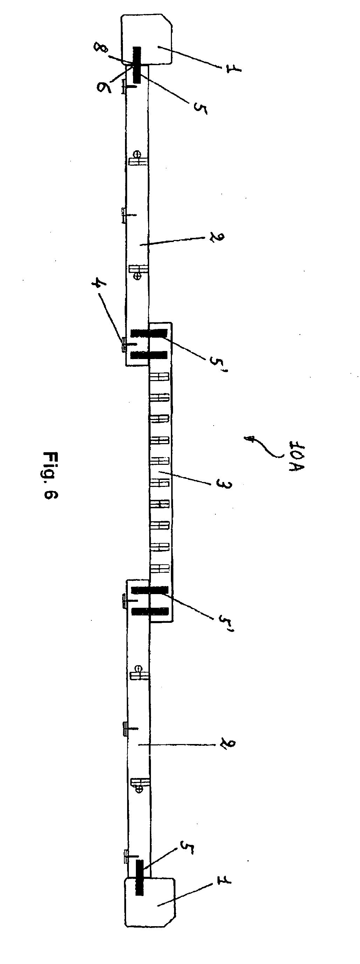

Turning now to figs. 4 to 6, it is directly noticeable that said stopper 10A has no more the single arrangement with only one abutting member 1 but the double arrangement with two abutting members 1, since the adjusting plate 3 is coupled at both its ends with fixing plates 2 each connected to corresponding abutting member 1. It is clear that in such case feet 4 are no more needed since the plate 3 is connected at both sides. In the double arrangement of the abutting member 1 the stopper 10 is adapted for defining, still by coupling of the holes 2a with holes 3a, spaces between a vehicle and the subsequent one when they are parked in line.

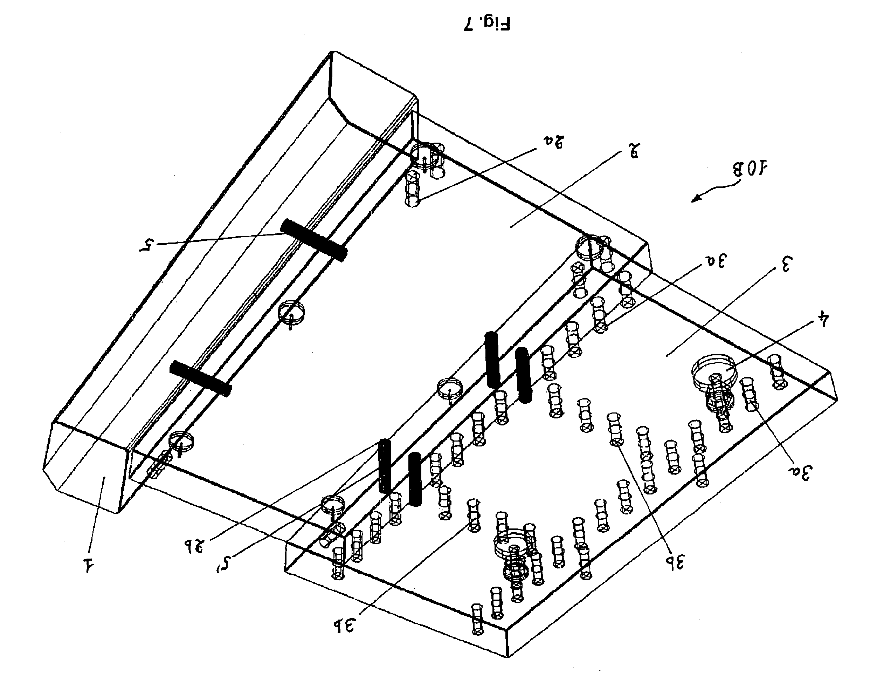

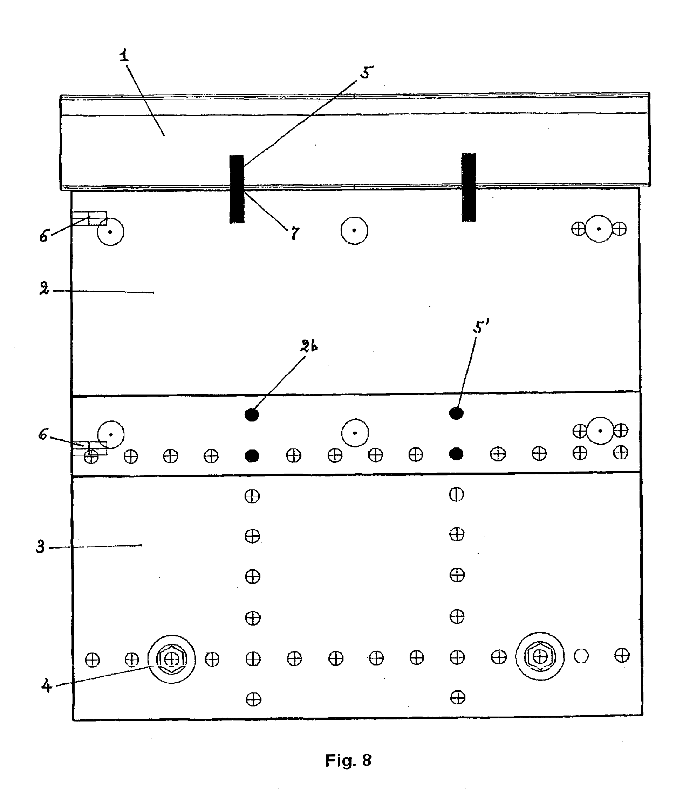

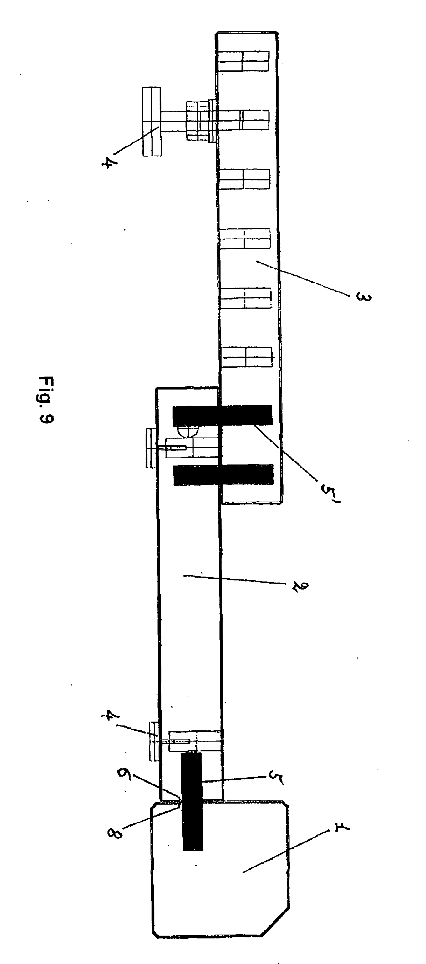

In figs. 7 to 9 a further arrangement of the parking stopper 10B is shown wherein plate 2 is fixed onto the abutting member 1 by pins 5 engaged, this time, in a pair of holes 7 formed on the lateral surface of one of the longer sides. Now the adjusting plate 3 is fixed onto said fixing plate 2 by coupling of two pairs of plurality of holes 3b with pairs of holes 2b. Such arrangement having plates 2 and 3 connected to each other along their respective longer side, on one hand is provided with a shorter adjusting range in respect of the previous arrangements, on the other hand can surely result more rigid against the vehicle pushing during parking and therefore also more suitable for heavy vehicles such as trucks, vans and the like.

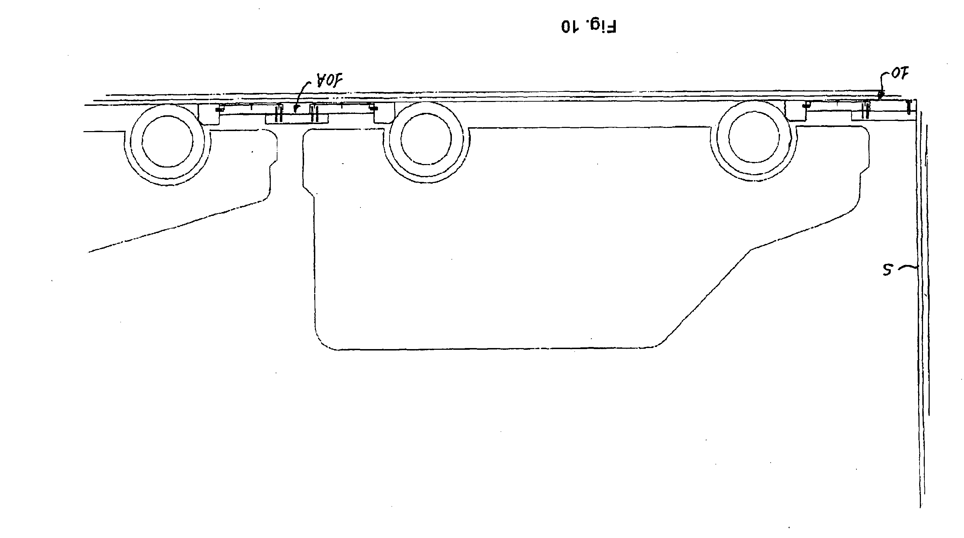

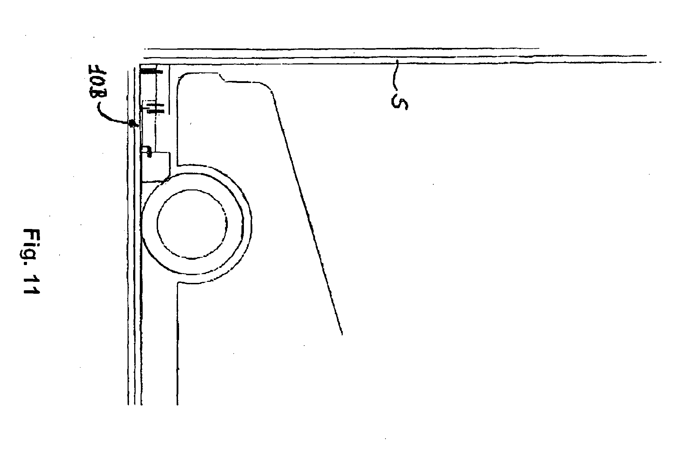

Finally figs. 10 and 11 show the use of said stopper in its various configurations. Fig. 10 shows use of the stoppers 10 and 10A, respectively, while Fig. 11 shows use of the stopper 10B, with S indicating a fixed structure.

From the above provided detailed description regarding the parking stopper 10 it is clear that it can be immediately used, since any fixed installation but only a fixed reference, in case of a single vehicle parking, or a wheel of a just parked vehicle is required.

Although the parts of the parking stopper of the present invention can be manufactured from metal, plastics and the like, an essential feature is the opportunity to entirely manufacture it with wood, preferably treated in order to be resistant against atmospheric agents, thus maintaining extremely low and advantageous the cost of such item.

Even if squared fixing and adjusting plates could be provided, their rectangular shape previously disclosed and shown in the annexed drawings is with no doubt preferable since it allows a wider range of adjustments between minimal and maximum distance from the fixed structure.

## Claims

1. A vehicle parking stopper (10) comprising:
(i) at least an abutting member (1) provided on one of the lateral faces with a pair of holes (8),
(ii) at least a fixing plate (2) provided with a first pair of holes (6) on a first lateral face, with a second pair of holes (7) on a second lateral face adjacent to the first lateral face, with a third and fourth pair of holes (2a) on the upper surface next to the lateral face opposed to the said first lateral face, and with a fifth and sixth pair of holes (2b) on the upper surface next to the lateral face opposed to the said second lateral face,
(iii) at least an adjusting plate (3) provided on its lower face with a first and a second pair of holes (3a, 3b) next to a lateral face,
whereby the mutual axial distance between the two holes of the respective pair of holes is predetermined and equal for the pair of holes (8) of the abutting member and for the first and second pair of holes (6, 7) of the fixing plate, and
whereby the mutual axial distance between the two holes of the respective pair of holes is predetermined and equal for the third, fourth, fifth and sixth pair of holes (6) of the fixing plate and for the first and second pair of holes (7) of the adjusting plate,
so that
said abutting member (1) and said fixing plate (2) are adapted to be fixed by engaging a first pair of pins (5) to the pair of holes (8) of the abutting member (1) and the first pair of holes (6) of the fixing plate, and
said fixing plate (2) and said adjusting plate (3) are adapted to be fixed by engaging a second and third pair of pins (5') to the fifth and sixth pair of holes (2b) of the fixing plate (2) and the first and second pair of holes (3a, 3b) of the adjusting plate (3).

2. The vehicle parking stopper (10) according to claim 1, wherein said abutting member (1) is a profile having a square or rectangular section chamfered at upper corner of the face contacting wheels of said vehicles.

3. The vehicle parking stopper (10) according to claim 1, wherein said fixing plate (2) and said adjusting plate (3) are plates having a rectangular shape.

4. The vehicle parking stopper (10) according to claim 1, wherein said fixing plate (2) is provided with feet (4).

5. The vehicle parking stopper (10) according to claim 1, wherein said adjusting plate (3) is provided with feet (4).

6. The vehicle parking stopper (10) according to claim 1, wherein said fixing and adjusting plates are connected at their shorter sides.

7. The vehicle parking stopper (10B) according to claim 1, wherein said fixing and adjusting plates are connected at their longer sides.

8. The vehicle parking stopper (10A) according to claim 1, wherein said adjusting plate (3) is interposed between two fixing plates (2), each fixing plate (2) being connected with a corresponding abutting member (1).

9. The vehicle parking stopper (10) according to claim 1, wherein said abutting member (1), said fixing plate (2) and said adjusting plate (3) are made of wood.

## Patentansprüche

1. Fahrzeugparkstopper (10) mit den folgenden Merkmalen:
- (i) mindestens ein Anschlagselement (1), das an einer der Seitenflächen mit einem Paar Löcher (8) versehen ist;
- (ii) mindestens eine Befestigungsplatte (2) mit einem ersten Paar Löcher (6) and einer ersten Seitenfläche, mit einem zweiten Paar Löcher (7) an einer zweiten an der ersten Seitenfläche anliegenden Seitenfläche, mit einem dritten und vierten Paar Löcher (2a) an der oberen Fläche, nahe an der der besagten ersten Seitenfläche gegenüberliegenden Seitenfläche, und mit einem fünften und sechsten Paar Löcher (2b) an der oberen Fläche, nahe an der der besagten zweiten Seitenfläche gegenüberliegenden Seitenfläche;
- (iii) mindestens eine Einstellplatte (3), die an ihrer unteren Fläche nahe an einer Seitenfläche mit einem ersten und einem zweiten Paar Löcher (3a, 3b) versehen ist;
- worin die gegenseitige Achsenabstand zwischen den beiden Löchern des entsprechenden Paars Löcher für das Paar Löcher (8) des Anschlagselements (1) und das erste und zweite Paar Löcher (6,7) der Befestigungsplatte (2) vorbestimmt und gleich ist;
- worin die gegenseitige Achsenabstand zwischen den beiden Löchern des entsprechenden Paars Löcher für das dritte, vierte, fünfte und sechste Paar Löcher (6) der Befestigungsplatte (2) und das erste und zweite Paar Löcher (7) der Einstellplatte (3) vorbestimmt und gleich ist;
- wobei das Anschlagselement (1) und die Befestigungsplatte (2) aneinander gesichert werden können, indem ein erstes Paar Stifte (5) in das Paar Löcher (8) des Anschlagselements (1) und das erste Paar Löcher (6) der Befestigungsplatte (2) einfällt; und
- wobei die Befestigungsplatte (2) und die Einstellplatte (3) aneinander gesichert werden können, indem ein zweites und ein drittes Paar Stifte (5') in das fünfte und sechste Paar Löcher (2b) der Befestigungsplatte (2) und das erste und zweite Paar Löcher (3a, 3b) der Einstellplatte (3) einfallen.

2. Fahrzeugparkstopper (10) nach Anspruch 1, worin das Anschlagselement (1) ein Profil ist, welches einen viereckigen bzw. rechteckigen Durchschnitt aufweist, der an der oberen Ecke der die Fahrzeugsräder berührenden Fläche abgeschrägt ist.

3. Fahrzeugparkstopper (10) nach Anspruch 1, worin die Befestigungsplatte (2) und die Einstellplatte (3) eine rechteckige Gestaltung aufweisen.

4. Fahrzeugparkstopper (10) nach Anspruch 1, worin die Befestigungsplatte (2) Füsse (4) aufweist.

5. Fahrzeugparkstopper (10) nach Anspruch 1, worin die Einstellplatte (3) Füsse (4) aufweist.

6. Fahrzeugparkstopper (10) nach Anspruch 1, worin die Befestigungs- und Einstellplatten an ihren kürzeren Seiten verbunden werden.

7. Fahrzeugparkstopper (10B) nach Anspruch 1, worin die Befestigungs- und Einstellplatten an ihren längeren Seiten verbunden werden.

8. Fahrzeugparkstopper (10A) nach Anspruch 1, worin die Einstellplatte (3) zwischen zwei Befestigungsplatten (2) dazwischenliegt und jede Befestigungsplatte (2) je mit einem entsprechenden Anschlagselement (1) verbunden ist.

9. Fahrzeugparkstopper (10) nach Anspruch, worin das Anschlagselement (1), die Befestigungsplatte (2) und die Einstellplatte (3) aus Holz hergestellt werden.

## Revendications

1. Butée (10) de stationnement de véhicule avec les caractéristiques suivantes:
- (i) un élément d'arrêt (1) muni d'une paire de trous (8) sur une des faces latéraux;
- (ii) au moins une plaque de fixage (2) munie d'une première paire de trous (6) sur une première face latérale, d'une deuxième paire de trous (7) sur une deuxième face latérale adjacente à la première face latérale, d'une troisième et quatrième paire de trous (2a) sur la surface supérieure près de la face latérale oppose à la dite première face latérale, et d'une cinquième et sixième paire de trous(2b) sur la face supérieure près de la face latérale oppose à la dite deuxième face latérale;
- (iii) au moins une plaque de réglage (3) munie sur sa face inférieure d'une première et une deuxième paire de trous (3a, 3b) près d'une face latérale;
- dont la distance axiale réciproque entre les deux trous de la paire correspondante de trous est prédéterminée et égale pour la paire de trous (8) de l'élément d'arrêt (1) et pour la première et la deuxième paire de trous (6,7) de la plaque de fixage (2), et
- dont la distance axiale réciproque entre les deux trous de la paire correspondante de trous est prédéterminée et égale pour la troisième, quatrième, cinquième et sixième paire de trous de la plaque de fixage et pour la première et deuxième paire de trous de la plaque de réglage;
- de sorte que la dit élément d'arrêt (1) et la dite plaque de fixage (2) sont aptes à être fixés par engagement d'une première paire de chevilles (5) avec la paire de trous (8) de l'élément d'arrêt (1) et la première paire de trous (6) de la plaque de fixage (2), et
- de sorte que la dite plaque de fixage (2) et la dite plaque de réglage (3) sont aptes à être fixés par engagement d'une deuxième et troisième paire de chevilles (5') avec la cinquième et la sixième paire de trous (2b) de la plaque de fixage (2) et la première et deuxième paire de trous (3a,3b) de la plaque de réglage (3).

2. Butée (10) selon la revendication 1, dont le dit élément d'arrêt (1) est un profil avec section carrée ou rectangulaire, arrondi à l'arête supérieure de la face au contact de roues du véhicule.

3. Butée (10) selon la revendication 1, dont la dite plaque de fixage (2) et la dite plaque de réglage (3) sont des plaques avec une forme rectangulaire.

4. Butée (10) selon la revendication 1, dont la dite plaque de fixage (2) est munie de pieds (4).

5. Butée (10) selon la revendication 1, dont la dite plaque de réglage (3) est munie de pieds (4).

6. Butée (10) selon la revendication 1, dont les dites plaques de fixage et de réglage sont assemblées par leur côtés courts.

7. Butée (10B) selon la revendication 1, dont les dites plaques de fixage et de réglage sont assemblées par leur côtés longs.

8. Butée (10A) selon la revendication 1, dont la dite plaque de réglage (3) est interposée entre deux plaques de fixage (2), chaque plaque de fixage (2) étant assemblée avec un élément d'arrêt (1) correspondant.

9. Butée (10) selon la revendication 1, dont l'élément d'arrêt (1), la plaque de fixage (2) et la plaque de réglage (3) sont fabriqués en bois.
